Europäisches Patentamt

European Patent Office

Office européen des brevets

(19)

(11) Numéro de publication : **0 125 991**
**B1**

(12) **FASCICULE DE BREVET EUROPÉEN**

(45) Date de publication du fascicule du brevet :
09.11.88

(51) Int. Cl.⁴ : **G 05 G 9/04**, B 25 J 13/02

(21) Numéro de dépôt : **84400940.7**

(22) Date de dépôt : **09.05.84**

(54) **Manche à balai pour pupitre de télécommande.**

(30) Priorité : **11.05.83 FR 8307908**

(43) Date de publication de la demande :
**21.11.84 Bulletin 84/47**

(45) Mention de la délivrance du brevet :
**09.11.88 Bulletin 88/45**

(84) Etats contractants désignés :
**BE DE GB NL**

(56) Documents cités :
**AU-A- 474 230**
**FR-A- 1 221 344**
**FR-A- 2 369 055**
**FR-A- 2 379 852**
**FR-A- 2 434 426**
**US-A- 3 355 960**
**US-A- 3 776 058**
**Le dossier contient des informations techniques présentées postérieurement au dépôt de la demande et ne figurant pas dans le présent fascicule.**

(73) Titulaire : **THOMSON-CSF**
**173, Boulevard Haussmann**
**F-75379 Paris Cédex 08 (FR)**

(72) Inventeur : **Mourier, Christian**
**THOMSON-CSF SCPI 173, bld Haussmann**
**F-75379 Paris Cedex 08 (FR)**

(74) Mandataire : **Turlèque, Clotilde et al**
**THOMSON-CSF SCPI 19, avenue de Messine**
**F-75008 Paris (FR)**

Jouve, 18, rue St-Denis, 75001 Paris, France

## Description

L'invention se rapporte aux systèmes de télécommande ; elle concerne un manche à balai destiné à équiper le pupitre de tels systèmes.

La télécommande d'un équipement ou des organes de cet équipement nécessite pour l'opérateur d'accéder à diverses commandes, souvent plus ou moins dépendantes, qui sont disposées sur un pupitre. D'un point de vue ergonomique, il se pose le problème d'optimiser et de coordonner les différentes manœuvres que doit exécuter l'opérateur et ceci d'autant plus si les tâches de l'opérateur consistent à surveiller et à commander simultanément plusieurs équipements.

Par exemple, ce problème se pose dans le domaine de la télévision. Les caméras de prise de vue se trouvent situées au voisinage des scènes à téléviser. Chacune de ces caméras est servie par un « cadreur » dont les tâches sont de cadrer l'image de la scène et d'effectuer la mise au point optique de l'image. A chaque caméra correspond, un « pupitre de télécommande », généralement assez éloigné du lieu où se trouve la caméra. Plusieurs pupitres de télécommande sont centralisés en un point où un opérateur assure diverses tâches de surveillance et de commande des caméras, parmi lesquelles la commande d'ouver-ture/fermeture du diaphragme, ou iris, de l'objectif des caméras, le réglage du « niveau de noir » de l'image, la présélection des caméras etc... Les niveaux d'éclairement des différentes scènes télévisées peuvent varier dans des limites importantes, il est donc utile de fixer la plage de réglage du diaphragme, son centrage et d'ajuster l'ouverture du diaphragme à l'intérieur de cette plage. Toutes ces opérations continuellement renouvelées doivent être appliquées à chacune des caméras.

Dans les pupitres de télécommande en service, les diverses commandes sont plus ou moins dispersées sur la platine du pupitre, il en résulte que les caractéristiques des caméras ne sont pas exploitées de façon optimale.

Le but que vise l'invention est de regrouper plusieurs de ces commandes, notamment celles qui sont dépendantes les unes des autres, de manière que l'opérateur soit en mesure d'agir quasi simultanément sur l'ensemble des réglages en n'utilisant que l'une de ses mains.

Selon l'invention, un manche à balai pour pupitre de télécommande, est caractérisé en ce qu'il comporte :

— un arbre support horizontal, maintenu entre deux flasques-supports ;

— un élément longitudinal dont le grand axe est perpendiculaire à l'arbre support, libre de tourner autour de cet arbre support ;

— une tige traversant l'élément longitudinal le long de son grand axe, libre de tourner et de coulisser par rapport à l'élément longitudinal et surmontée d'un panneau ;

— un transducteur de position solidaire de l'une de deux flasques-supports et couplé à l'élément longitudinal par un premier engrenage solidaire dudit transducteur et entraîné par un second engrenage solidaire de l'élément longitudinal, pour mesurer la rotation de l'élément longitudinal par rapport à l'arbre support ;

— un transducteur de position solidaire de l'élément longitudinal pour mesurer la position angulaire de la tige par rapport à l'élément longitudinal ;

— un rupteur solidaire de l'élément longitudinal pour discriminer deux positions de la tige lorsqu'elle coulisse le long de l'élément longitudinal ;

— deux disques de réglage manuel montés sur l'arbre support de part et d'autre de l'élément longitudinal et libres de tourner autour de l'arbre support indépendamment de l'élément longitudinal ;

— deux transducteurs de position solidaires respectivement de l'une et de l'autre des deux flasques-support pour mesurer la position angulaire des deux disques respectivement.

D'autres caractéristiques apparaîtront dans la description détaillée qui va suivre, faite en regard de dessins annexés ; sur ces dessins :

— la figure 1 représente une partie d'un exemple de réalisation d'un pupitre de télécommande comportant un manche à balai selon l'invention ;

— la figure 2 est le schéma électrique de la partie électrique de cet exemple de réalisation ;

— la figure 3 est un diagramme illustrant le fonctionnement de cette partie électrique ;

— la figure 4 est une vue en coupe des éléments mécaniques de cet exemple de réalisation ;

— la figure 5 est une vue en coupe d'un exemple de réalisation du pommeau du manche à balai.

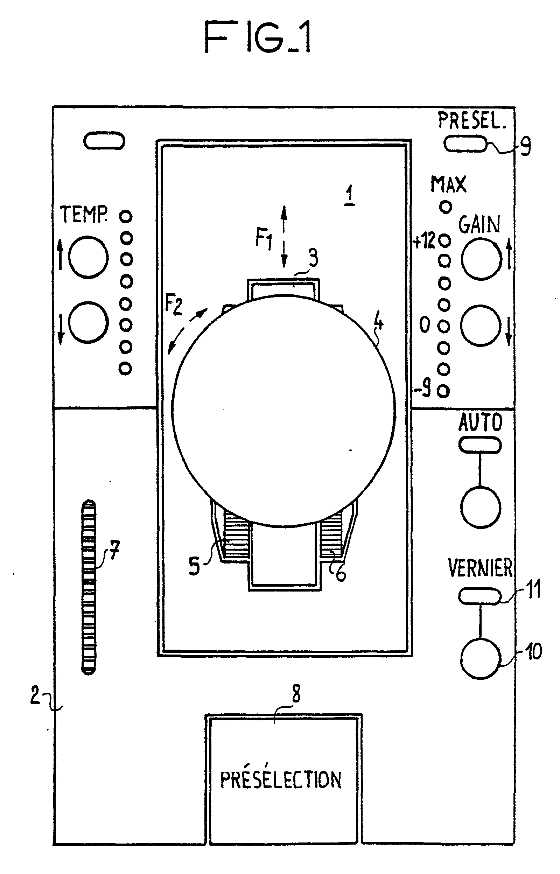

La figure 1 représente exclusivement la partie du pupitre de télécommande qui se rapporte au manche à balai 1. Une platine 2 supporte le manche à balai et divers organes qui seront décrits ci-après. Dans la platine 2 est pratiquée une ouverture 3 de forme sensiblement rectangulaire. A travers cette ouverture se projettent, vers l'extérieur, les éléments suivants : un pommeau 4, un premier disque rotatif 5 et un second disque rotatif 6.

Le pommeau 4 peut être déplacé transversalement selon les directions de la flèche $F_1$, en rotation selon les directions de la flèche $F_2$ et enfin axialement par simple pression sur sa face supérieure. Les mouvements de rotation des deux disques 5 et 6 sont indépendants l'un de l'autre et des déplacements du pommeau 4. L'opérateur a ainsi quatre commandes de réglage et une commande en tout ou rien à la portée d'une main.

Sur cette platine 2 on voit également les organes suivants :

— un afficheur électro-optique 7 à barres lumineuses qui permet de visualiser la valeur de réglage du diaphragme de l'objectif de la caméra ;

— une touche de présélection 8 de la caméra ;

— un voyant lumineux 9 qui permet de visualiser la présélection, celle-ci étant réalisée par un déplacement axial du pommeau 4 ou une action sur la touche de présélection 8 ;

— un bouton-poussoir 10 associé à un voyant lumineux 11, la fonction de ce bouton-poussoir est de permettre au manche à balai d'opérer sur un mode « vernier » ;

— et divers autres organes qui n'étant pas liés au fonctionnement du manche à balai ne seront pas décrits.

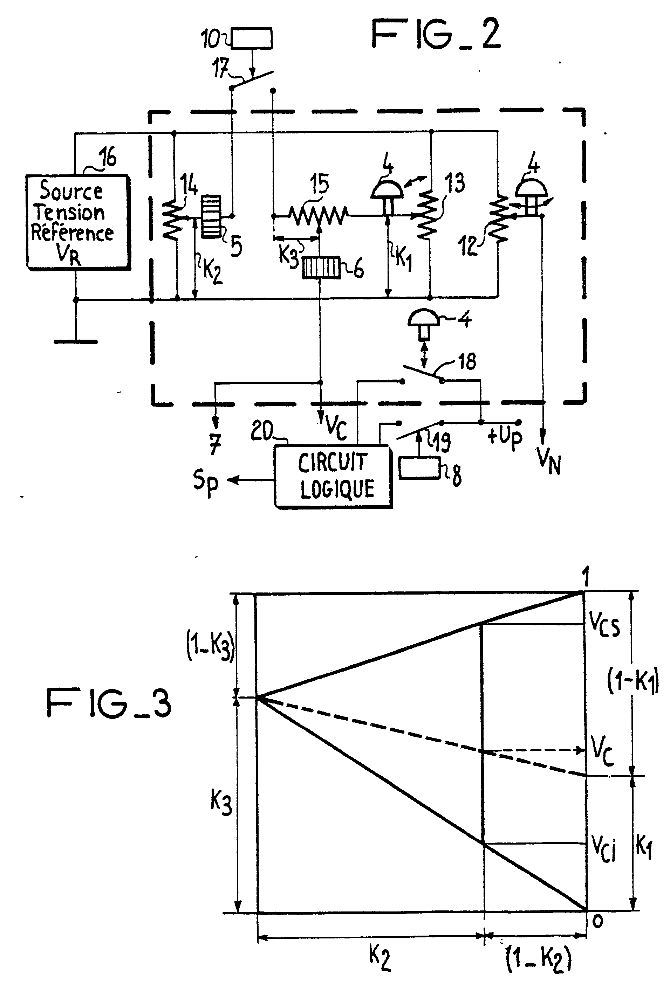

La figure 2 est le schéma électrique de la partie électrique du manche à balai et des organes qui lui sont associés. Un potentiomètre 12, physiquement couplé au mouvement de rotation du pommeau 4 du manche à balai, délivre sur son curseur un signal de sortie $V_n$ qui permet de varier le « niveau de noir » de l'image de la caméra. Un montage potentiométrique comprend : un premier potentiomètre 13, ou potentiomètre de commande, qui est physiquement couplé au mouvement transversal du pommeau 4 du manche à balai ; un second potentiomètre 14, ou potentiomètre de centrage, qui est physiquement couplé au mouvement de rotation du disque 5 et enfin un troisième potentiomètre 15 ou potentiomètre de sensibilité, qui est physiquement couplé au mouvement de rotation du disque 6. Les premier et second potentiomètres 13 et 14 sont connectés en parallèle sur une source 16 de tension continue de référence $V_r$, tandis que le troisième potentiomètre 15 est connecté, lorsque l'interrupteur 17 est fermé, entre les curseurs des premier et second potentiomètre 13 et 14. Ce montage potentiométrique fournit sur la sortie du curseur du troisième potentiomètre un signal de sortie $V_c$ destiné au réglage du diaphragme de l'objectif de la caméra, et commandant l'afficheur électro-optique 7.

Un interrupteur 17, actionné par le bouton-poussoir 10, permet au manche à balai d'opérer avec ou sans effet de « vernier » ; sa fonction est de déconnecter le curseur du second potentiomètre 14, de ce fait l'amplitude du signal de sortie $V_c$ est indépendante de la position des curseurs des second et troisième potentiomètres 14 et 15. La partie électrique du manche à balai comprend également un interrupteur 18 qui est physiquement couplé au mouvement axial du pommeau 4 du manche à balai. La touche de présélection 8 actionne un interrupteur 19, et ces interrupteurs 18 et 19 sont couplés à l'entrée d'un circuit logique 20 qui fournit un signal $V_p$ de présélection de la caméra. La commande de présélection est possible par appui sur le pommeau 4 du manche à balai ou sur la touche de présélection 8.

La figure 3 est un diagramme qui illustre le fonctionnement en mode « vernier » du montage potentiométrique qui vient d'être décrit, en donnant la valeur du signal $V_c$ obtenue en fonction des réglages des potentiomètres 13, 14 et 15. Sur ce diagramme on a supposé arbitrairement que la valeur de la tension de référence $V_r$ fournie par la source 16 était égale à l'unité. Sur ce diagramme et en se rapportant à la figure 2, la grandeur $K_2$ représente la position du curseur du potentiomètre de centrage 14 ; la grandeur $K_3$ représente la position du curseur du potentiomètre de sensibilité 15, et que la grandeur $K_1$ représente la position du curseur du potentiomètre de commande 13.

En supposant que l'interrupteur 17 soit en position « fermée » correspondant au mode « vernier », l'examen de la figure 2 montre que la fonction du potentiomètre 14 est de centrer la plage de réglage du signal $V_c$ ; la fonction du potentiomètre 15 est de régler l'étendue de cette plage de réglage, qui est comprise entre des valeurs $V_{cs}$ et $V_{ci}$, et que la fonction du potentiomètre 13 est de faire varier la valeur du signal $V_c$ entre ces deux limites. Sur la figure 3, le trait épais en pointillés représente la position variable du potentiomètre de commande 13. L'intersection de ce trait épais en pointillés avec le segment représentant la plage de réglage $V_{cs}$ $V_{ci}$, détermine un point dont l'ordonnée fournit la valeur du signal $V_c$. Lorsque l'interrupteur 17 est en position « ouverte » la valeur $V_c$ peut être entre la valeur unitaire et la valeur nulle, c'est-à-dire sur une plage beaucoup plus étendue.

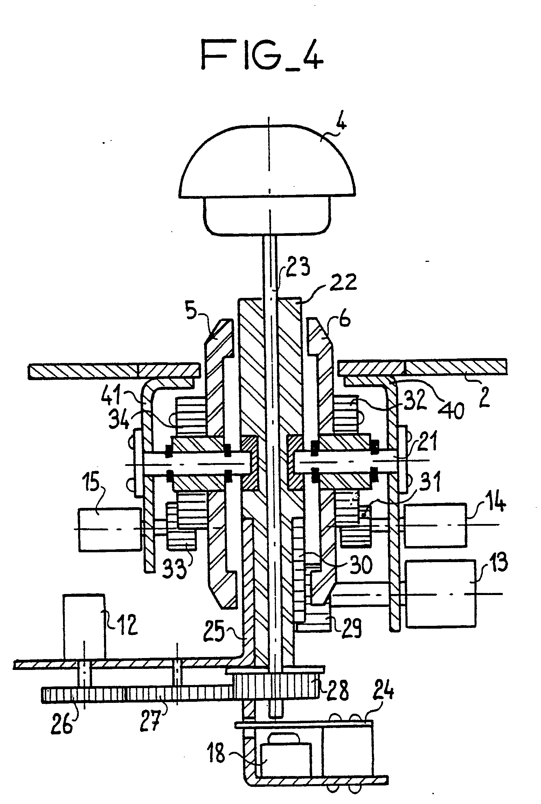

La figure 4 est une vue en coupe de la partie mécanique du manche à balai 1. Sur cette figure 4 on voit les éléments décrits précédemment :

— la platine 2 du pupitre de commande dans laquelle est pratiquée l'ouverture 3 ;

— le disque rotatif 5 qui est mécaniquement couplé au potentiomètre de centrage 15 ;

— le disque rotatif 6 qui est mécaniquement couplé au potentiomètre de sensibilité 14 ;

— le pommeau 4 qui est mécaniquement couplé au potentiomètre de commande 13, au potentiomètre 12 de « niveau de noir » et à l'interrupteur 18 de présélection.

Deux flasques parallèles 40 et 41, mécaniquement solidaires de la platine 2, portent un arbre horizontal 21 qui, dans l'exemple de réalisation décrit, comporte une interruption centrale. Sur cet arbre 21 sont articulés en rotation un élément longitudinal 22 et deux disques rotatifs 5 et 6 disposés de part et d'autre de l'élément longitudinal 22. Les disques 5 et 6 peuvent ainsi être tournés autour de leur axe de symétrie. Cet élément longitudinal 22 est traversé, dans le sens de sa longueur, par une tige 23 à section circulaire, susceptible de tourner et de coulisser librement à l'intérieur. Dans cet exemple l'axe de la tige 23 est concourant avec l'axe des deux moitiés de l'arbre 21. Cette tige traversante 23 est surmontée du pommeau 4 et est maintenue en position haute par un élément élastique 24 situé entre l'extrémité inférieure de cette tige et l'interrupteur 18.

Selon une variante de construction cet élément élastique pourrait être incorporé dans l'élément longitudinal 22 et l'extrémité inférieure de la tige traversante 23 pourrait venir directement au contact de l'interrupteur 18.

La partie inférieure de l'élément longitudinal 22 est munie d'une pièce-support 25 sur laquelle sont montés les éléments suivants : le potentiomètre de « niveau de noir » 12 et ses engrenages 26 et 27, l'engrenage 27 s'engageant dans un pignon 28 mécaniquement solidaire de la tige traversante 23 ; l'interrupteur 18 et l'élément élastique 24.

Sur le flasque-support 40 sont montés, le potentiomètre de commande 13 qui est couplé mécaniquement à l'élément longitudinal 22 par les engrenages 29 et 30, et le potentiomètre de centrage 14 qui est couplé mécaniquement au disque rotatif 6 par les engrenages 31 et 32. Sur le flasque-support 41 est monté le potentiomètre de sensibilité 15 qui est couplé mécaniquement au disque rotatif 5 par les engrenages 33 et 34.

Dans ce mode de construction, les moyens de couplage mécaniques des pièces mobiles avec les capteurs de position sont réalisés par des engrenages 26-34, toutefois compte-tenu du faible couple de friction de ces capteurs de position, des moyens de couplages par courroies sont envisageables. Les éléments 12-15, qui constituent les capteurs de position du manche à balai sont des potentiomètres, mais ils pourraient être de nature différente et d'un type analogique ou numérique.

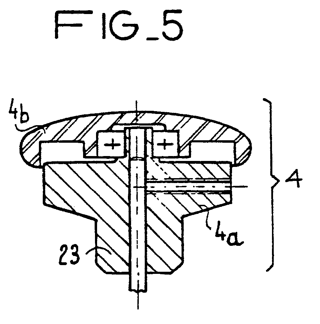

La figure 5 est une vue en coupe d'un exemple de réalisation du pommeau 4. Le pommeau 4 comprend deux éléments : un élément 4a qui est mécaniquement solidaire de la tige traversante 23 par une vis 43 et un « galet fou » 4b qui coiffe cet élément 4a, en étant solidaire en translation et libre en rotation grâce à un roulement à billes 42. Le « galet fou » 4b permet d'éviter que l'opérateur, dans les mouvements de translation du manche à balai, ne vienne modifier la position de réglage en rotation du pommeau.

L'élément 4a du pommeau et les disques rotatifs 5 et 6 peuvent comporter des empreintes (non représentées), telles que des molettages, qui facilitent la manœuvre de ces pièces par l'opérateur.

L'invention n'est pas limitée dans ses caractéristiques à la forme de construction décrite. Notamment, la forme et la disposition des éléments mécaniques peuvent être variées. Par exemple, l'axe de la tige 23 et l'axe de l'arbre 21 peuvent être non concourants ce qui permet d'utiliser un arbre 21 constitué d'une seule pièce traversant de part en part l'élément longitudinal 22. De même le schéma électrique du manche à balai n'a été fourni que dans un but illustratif et peut être modifié en vue d'applications spécifiques. D'autre part, les éléments mobiles peuvent être munis de moyen de freinage si le couple de friction des capteurs de position correspondants est insuffisant pour assurer la stabilité des réglages.

L'invention n'est pas non plus limitée dans son application au réglage du diaphragme de l'objectif d'une caméra de télévision. D'une façon générale l'invention trouve son application dans les systèmes de télécommande dans lesquels des organes de commandes, plus ou moins dépendants les uns des autres, doivent être accessibles à l'opérateur d'une manière quasi simultanée.

## Revendications

1. Manche à balai pour pupitre de télécommande, caractérisé en ce qu'il comprend :
— un arbre support horizontal (21), maintenu entre deux flasques-supports (40, 41) ;
— un élément longitudinal (22) dont le grand axe est perpendiculaire à l'arbre support (21), libre de tourner autour de cet arbre support (21) ;
— une tige (23) traversant l'élément longitudinal (22) le long de son grand axe, libre de tourner et de coulisser par rapport à l'élément longitudinal (22), et surmontée d'un pommeau (4) ;
— un transducteur de position (13) solidaire de l'une des deux flasques-supports (40, 41) et couplé à l'élément longitudinal (22) par un premier engrenage (29) solidaire dudit transducteur (13) et entraîné par un second engrenage (30) solidaire de l'élément longitudinal (22), pour mesurer la rotation de l'élément longitudinal (22) par rapport à l'arbre support (21) ;
— un transducteur de position (12) solidaire de l'élément longitudinal (22), pour mesurer la position angulaire de la tige (23) par rapport à l'élément longitudinal (22) ;
— un rupteur (18) solidaire de l'élément longitudinal (22) pour discriminer deux positions de la tige (23) lorsqu'elle coulisse le long de l'élément longitudinal (22) ;
— deux disques de réglage manuel (5, 6) montés sur l'arbre support (21) de part et d'autre de l'élément longitudinal (22) et libres de tourner autour de l'arbre support (21) indépendamment de l'élément longitudinal (22) ;
— deux transducteurs de position (14, 15) solidaires respectivement de l'un et de l'autre des deux flasques-support (40, 41) pour mesurer la position angulaire des deux disques (5, 6) respectivement.

2. Manche à balai suivant la revendication 1, caractérisé en ce que la tige (23) est maintenue en position haute par un élément élastique (24) solidaire de l'élément longitudinal (22).

3. Manche à balai suivant la revendication 1, caractérisé en ce que le pommeau (4) comporte une partie inférieure (4a) mécaniquement solidaire de la tige et comporte une partie supérieure (4b), libre en rotation et solidaire en translation, par rapport à la partie inférieure (4a).

4. Manche à balai selon la revendication 1, caractérisé en ce que les trois capteurs de position (13, 14, 15) actionnés par la rotation de l'élément longitudinal (22) autour de l'arbre support (21) et la rotation des deux disques (5, 6) comportent chacun un potentiomètre (14, 15, 13) ; et en ce que ces potentiomètres sont couplés électriquement pour que le signal électrique fourni par le capteur de position (13) de l'élément longitudinal (22) couvre une plage, dont les deux bornes sont fixées respectivement par la position angulaire des disques (5, 6).

5. Utilisation d'un manche à balai suivant l'une des revendications 1 à 4 pour télécommander le diaphragme et le niveau du noir dans une caméra de télévision.

**Claims**

1. A joystick for a remote control console characterized in that it comprises ;
— a horizontal supporting shaft (21) held between two supporting flanges (40 and 41) ;
— a longitudinal element (22) whose major axis is perpendicular to the supporting shaft (21) and which is free to turn about this supporting shaft (21) ;
— a rod (23) extending through the longitudinal element (22) along its major axis, being free of turn and slide in relation to the longitudinal element (22) and being surmounted by a knob (4) ;
— a positional transducer (13) connected with one of the two supporting flanges (40 and 41) and coupled with the longitudinal element (22) by a first gearing (29) connected with the said transducer (13) and driven by a second gearing (30) connected with the longitudinal element (22) in order to measure the rotation of the longitudinal element (22) in relation to the supporting shaft (21) ;
— a positional transducer (12) connected with the longitudinal element (22) in order to measure the angular position of the rod (23) in relation to the longitudinal element (22) ;
— a switch (18) connected with the longitudinal element (22) in order to sense two positions of the rod (23) when it slides along the longitudinal element (22) ;
— two manual adjustment disks (5 and 6) mounted on the supporting shaft (21) and the two sides of the longitudinal element (22) and free to turn about the supporting shaft (21) independently from the longitudinal element (22) ; and
— two positional transducers (14 and 15) respectively connected at the two sides with the two supporting flanges (40 and 41) in order to measure the angular position of the two disks (5 and 6), respectively.

2. The joystick as claimed in claim 1, characterized in that the rod (23) is kept in an upper position thereof by an elastic element (24) connected to the longitudinal element (22).

3. The joystick as claimed in claim 1, characterized in that the knob (4) comprises a lower part (4a) mechanically connected with the rod and an upper part (4b), free to rotate by not able to move independently in translation, in relation to the lower part.

4. The joystick as claimed in claim 1, characterized in that the three positional detectors (13, 14 and 15) operated to by the rotation of the longitudinal element (22) about the supporting shaft (21) and the rotation of the two disks (5 and 6) each comprise a potentiometer (14, 15 and 13) ; and in that these potentiometers are electrically coupled with in such a manner that the electrical signal furnished by the positional detector (13) of the longitudinal element (22) sweeps a range whose limits are respectively set by the angular position of the disks (5 and 6).

5. The use of a joystick as claimed in any one of the claims 1 through 4 for a diaphragm and the black level in a television camera.

**Patentansprüche**

1. Bedienungshebel für ein Steuerpult, dadurch gekennzeichnet, daß er umfaßt :
— eine waagerechte Stütz-Welle (21), die zwischen zwei Stütz-Seitenteilen (40, 41) festgehalten ist ;
— ein Längselement (22), dessen Hauptachse zu der Stütz-Welle (21) senkrecht steht und um diese Stütz-Welle (21) herum sich frei drehen kann ;
— eine Stange (23), die das Längselement (22) entlang seiner Hauptachse durchquert, in Bezug auf das Längselement (22) sich frei drehen und gleiten kann und von einem Knopf (4) überragt wird ;
— einen Positionsmelder (13), der mit einem der beiden Stütz-Seitenteile (40, 41) fest verbunden ist und an das Längselement (22) über eine erste Verzahnung (29) angekoppelt ist, die mit dem genannten Positionsmelder (13) fest verbunden ist, und über eine zweite Verzahnung (30) angetrieben ist, die mit dem Längselement (22) fest verbunden ist, um die Drehung des Längselementes (22) in Bezug auf die Stütz-Welle (21) zu messen ;
— einen Positionsmelder (12), der mit dem Längselement (22) fest verbunden ist, um die Winkelstellung der Stange (23) in Bezug auf das Längselement (22) zu messen ;
— einen Unterbrecher (18), der mit dem Längselement (22) fest verbunden ist, um zwei Positionen der Stange (23) zu unterscheiden, wenn sie entlang des Längselements (22) gleitet ;
— zwei manuell einstellbare Scheiben (5, 6), die beiderseits des Längselements (22) auf der Stütz-Welle (21) befestigt sind und um die Stütz-Welle (21) herum unabhängig von dem Längselement (22) sich frei drehen können ;
— zwei Positionsmelder (14, 15), wovon jeder mit dem jeweiligen Stütz-Seitenteil (40 bzw. 41) fest verbunden ist, um die jeweilige Winkelstellung der beiden Scheiben (5, 6) zu messen.

2. Bedienungshebel nach Anspruch 1, dadurch gekennzeichnet, daß die Stange (23) über ein elastisches Element (24), das mit dem Längselement (22) fest verbunden ist, in einer hohen Stellung festgehalten wird.

3. Bedienungshebel nach Anspruch 1, dadurch gekennzeichnet, daß der Knopf (4) einen unteren Teil (4a), der mit der Stange mechanisch fest verbunden ist, sowie einen oberen Teil (4b) umfaßt, der in Bezug auf den unteren Teil (4a) frei drehbar und in Translation fest verbunden ist.

4. Bedienungshebel nach Anspruch 1, dadurch gekennzeichnet, daß jeder der drei Positionsmelder (13, 14, 15), die durch die Drehung des Längselements (22) um die Stütz-Welle (21) herum und die Drehung der zwei Scheiben (5, 6) betätigt werden, jeweils ein Potentiometer (14, 15, 13) umfaßt ; und daß diese Potentiometer elektrisch so ankoppelt sind, daß das vom Positionsmelder (13) des Längselements (22) abgegebene elektrische Signal einen Bereich abdeckt, dessen zwei Grenzen jeweils durch die Winkelstellung der Scheiben (5, 6) festgelegt werden.

5. Anwendung eines Bedienungshebels nach einem der Ansprüche 1 bis 4, um die Blende und den Schwarzpegel in einer Fernsehkamera fernzusteuern.

# FIG_1

0 125 991

# FIG_2

# FIG_3

2

# FIG_4

# FIG_5